(19) Europäisches Patentamt
European Patent Office
Office européen des brevets

(11) Publication number: **0 229 946 B1**

(12) **EUROPEAN PATENT SPECIFICATION**

(45) Date of publication of patent specification: 16.10.91    (51) Int. Cl.⁵: **H01F 1/04**

(21) Application number: **86116698.1**

(22) Date of filing: **02.12.86**

The file contains technical information submitted after the application was filed and not included in this specification

(54) **Permanent magnetic alloy.**

(30) Priority: **10.01.86 US 816778**
        **05.08.86 US 893516**

(43) Date of publication of application:
**29.07.87 Bulletin 87/31**

(45) Publication of the grant of the patent:
**16.10.91 Bulletin 91/42**

(84) Designated Contracting States:
**AT BE CH DE ES FR GB GR IT LI LU NL SE**

(56) References cited:
**EP-A- 0 144 112**
**EP-A- 0 175 222**
**EP-A- 0 195 219**
**US-A- 4 402 770**

**JOURNAL OF APPLIED PHYSICS, vol. 55, no. 6, 15th March 1984, Part VIA, pages 2073-2077, American Institute of Physics, New York, US; G.C. HADJIPANAYIS et al.: "Cobalt-free permanent magnet materials based on iron-rare-earth alloys (invited)"**

(73) Proprietor: **Ovonic Synthetic Materials Company, Inc.**
**1100 West Maple Road**
**Troy Michigan 48084(US)**

(72) Inventor: **Bergeron, Richard**
**21740 Springhill**
**Romulus Michigan 48174(US)**
Inventor: **McCallum, William R.**
**610 Westchester Way**
**Birmingham Michigan 48009(US)**
Inventor: **Canavan, Karen**
**1933 Goldview, Apt. 202**
**Troy Michigan 48084(US)**
Inventor: **Keem, John**
**1641 Lone Pine Road**
**Bloomfield Hills Michigan 48013(US)**
Inventor: **Kadin, Alan M.**
**1891 Kirts, Apt. 117**
**Troy Michigan 48084(US)**
Inventor: **Clemente, Gregory B.**
**2915 Dorchester, Apt. 103**
**Troy Michigan 48084(US)**

JOURNAL OF APPLIED PHYISICS, vol. 57, no. 8, 15th April 1985, pages 4094-4096, American Institute of Physics, New York, US; M. SAGAWA et al.: "Magnetic properties of rare-earth-iron-boron permanent magnet materials"

PATENT ABSTRACTS OF JAPAN, vol. 9, no. 118 (E-316)[1841], 23rd May 1985; & JP-A-60 9104

JAPANESE JOURNAL OF APPLIED PHYSICS, vol. 24, no. 6, June 1985, Part I, pages 699-703; K. HIRAGA et al.: "A study of micro-structures of grain boundaries in sintered Fe77Nd15B8 permanent magnet by high-resolution electron microscopy"

(74) Representative: **Müller, Hans-Jürgen, Dipl.-Ing.** et al
**Müller, Schupfner & Gauger Maximilian-strasse 6 Postfach 10 11 61**
**W-8000 München 1(DE)**

## Description

The invention concerns a magnetically isotropic hard magnetic material of the tetragonal TM-RE-B-type according to the preamble of Claim 1.

Such materials are already known by US-A-4 402 770. The prior art material comprises a polycrystalline multiphase alloy with an average grain size not exceeding 40 nm. It comprises iron, boron and lanthanum as the main elements. It is prepared by heating the corresponding amorphous alloy to a temperature of about 850 to 1200°K in an inert atmosphere until the multiphase structure is formed. The $H_c$-value is up to 0,75 MA/m (9,6 KOe).

There has long been a need for a relatively inexpensive, strong, high performance, permanent magnet. Such high performance permanent magnets would be characterized by relatively high magnetic parameters, e.g. coercive force ($H_c$) or coercivity, remanent magnetization or remanence, and maximum energy product.

Moreover, an ideal high-performance permanent magnet should exhibit a square magnetic hysteresis loop. That is, upon application of an applied magnetic field H greater than the coercive force Hc, all of the microscopic magnetic moments should align parallel to the direction of the applied force to achieve the saturation magnetization Ms. Moreover, this alignment must be retained not only for $H = 0$ (the remanent magnetization Mr), but also for a reverse applied magnetic force of magnitude less than Hc. This would correspond to a maximum magnetic energy product.

Unfortunately, this ideal situation is at best metastable with respect to the formation of magnetic domains in other directions, which act to reduce Mr and $BH_{max}$.

Conventional high-performance permanent magnets that approach square-loop behavior have four general requirements:

1. The material must be composed primarily of a ferromagnetic element or compound with a Curie temperature Tc that significantly exceeds the application temperature Ta, and with Ms at Ta large. Practically speaking, this requires either Fe or Co as the major constituent.

2. In order to obtain a high coercive force, the material must consist of an assembly of small particles or crystallites.

3. These particles or crystallites must exhibit microscopic magnetic anisotropy, i.e. they must have a preferred "easy axis" of magnetization. This can follow either from shape anisotropy or magneto-crystalline interaction.

4. These microscopically anisotropic particles must be aligned substantially in parallel within the macroscopic assembly, in order to achieve values of Mr that approach Ms, i.e. square-loop behavior.

The prior art teaches that good permanent magnetic materials, e.g., having maximum magnetic energy products of about 120 kTA/m (15 MGOe), consist of a conglomeration of non-interacting substantially crystallographically oriented uniaxial particles. When a sufficiently large magnetic field is applied in a given direction, the individual vector magnetizations of each of these particles point along the applied field, corresponding to the maximum or saturation value of the net magnetization, $M_s$. As the applied magnetic field is reduced to zero, the vector magnetization of each particle relaxes back to the easy magnetic axis of the particle, so that the net resultant remanent magnetization, $M_r$, may be less than $M_s$.

This is more fully elucidated by the following geometrical model, in which the "easy axis" of magnetization lies along a preferred axis, c. For an isolated uniformly magnetized particle, the magnetization vector, M, lies along the c axis for a zero applied field. If a field is applied in an arbitrary direction z, the magnetization is rotated away from the c axis until, at sufficiently large fields, M is parallel to z and $M_z$ is equal to $M_s$. When the field is removed, the magnetization relaxes back parallel to the c axis, subject to the condition that the projection of magnetization along the c axis is positive.

E.C. Stoner and E.V. Wohlfarth, Phil. Trans. Royal Soc. (London), A. 240, 599 (1948) have calculated the hysteresis loop for such a particle for different orientations of the c axis with respect to z. For the case of a sample comprising a large number of such non-interacting particles oriented along some direction, the magnetic properties for the material or sample are the sum or average of the properties of the individual particles. Such a sample or material is hereinafter referred to as an anisotropic material. Anisotropic materials have at least one magnetic property which is a strong function of the direction of measurement. Such materials are characterized by a single "easy direction" of magnetization, where the value of the property greatly exceeds the value in other directions of magnetization. If the particles are non-interacting, the maximum energy product varies from a maximum value of 0.25 $(M_s)^2$, when z is parallel to the c axis, to 0 when z is perpendicular to the c axis. For a theoretical anisotropic material with $M_s$ equal to 16 T (kG) and $H_c$ chosen to be greater than $M_s$, the maximum theoretical value of the energy product of the hysteresis loop is 50g kTA/m (64 MGOe).

Stoner and Wohlfarth have carried out the same method of analysis for an ideal array of randomly oriented non-interacting uniformly magnetized particles. Since the array is isotropic there is no dependence of the hysteresis loop on the direction of the applied field. The maximum theoretical value of the energy product of such a loop is dependent on $M_s$ and $H_c$. If $M_s$ is chosen to equal 16 T (kG) and $H_c$ is chosen to be much greater than $M_s$, then the maximum energy product is 127 kTA/m (16 MGOe).

Hence, the teaching of the prior art for a perfectly oriented non-interacting material (anisotropic) is that the maximum energy product is at least four (4) times that of the same material when randomly oriented (isotropic).

For a general distribution of orientations of non-interacting particles, as a consequence of simple vector geometry,

$$(M_r/M_s) = \text{Cos } \theta,$$

where $\theta$ is the angle between the applied field and the easy axis of a given particle, and the result, indicated by double brackets, represents the size weighted average over all of the particles. As is well understood in the art, $M_r/M_s = 1$ along the direction of orientation of a perfectly oriented, non-interacting, permanent magnet sample (anisotropic), and $M_r/M_s = 0.5$ in all directions for a completely unoriented, non-interacting sample (isotropic). See, e.g., R.A. McCurrie, "Determination of the Easy Axis Alignment in Uniaxial Permanent Magnets for Remanence Measurements", J. Appl. Phys., Vol. 52, (No. 12), pages 7344-7346 (December 1981). Observations in the literature are consistent with this prediction. See, e.g., J.F. Herbst and J.C. Tracy, "On Estimating Remanent Magnetization from X-Ray Pole Figure Date", J. Appl. Phys., Vol. 50 (No. 6), pp. 4283-4284 (June 1979).

A figure of merit, which applicants refer to as the magnetic retention parameter, is

$$Q = \text{Sum}_{x,y,z}(M_r/M_s)^2,$$

where $M_s$ and $M_r$ are measured with the applied magnetic field along three orthogonal directions. Theoretically, for magnetic materials of the prior art, Q approaches 1 for perfectly oriented, non-interacting, particles or crystallites (anisotropic) and 0.75 for completely unoriented, non-interacting, crystallites (isotropic). The behavior for reported values of permanent magnetic materials of the prior art tend to produce values of Q which are substantially below the theoretical values. See, e.g., McCurrie; Herbst and Tracy; and Stoner and Wohlfarth; above.

Deviations from $(Mr/Ms) = [\text{Cos } \theta]$ corresponding to larger values of Mr might be expected to occur if the particles were permitted to interact with one another. Suggestions of this sort have appeared in the magnetic recording literature, where the proposed interaction was due to long range magnetic dipole fields. See, for example, H.N. Bertram and A.K. Bhatia, The Effect of Interaction on the Saturation Remanence of Particulate Assemblies, IEEE Trans. on Magnetics, MAG-9, pp 127-133 (1983), and R.F. Soohoo, Influence of Particle Interaction on Coercivity and Squareness of Thin Film Recording Media, J. Appl. Phys., Vol 52-(3), pp 2459-2461 (1981). However, this assumption of interactions has been questioned. See, for example, P.M. Davis, Effects of Interaction Fields on the Hysteretic Properties of Assemblies of Randomly Oriented Magnetic or Electric Moments, J. Appl. Phys., Vol 51 (2), pp 594-600 (1980).

Suggestions of short range interactions based on exchange have also been made with respect to amorphous iron-rare earth alloys at cryogenic termperatures by E. Callen, Y.L. Liu, and J.R. Cullen, Initial Magnetization, Remanence, and Coercivity of the Random Anisotropy Amorphous Ferromagnet Phys. Rev. B, Vol. 16, pp 263-270 (1977).

The literature does not contain any verified indications of enhanced values of Mr relative to those predicted by Stoner and Wohlfarth, above, in isotropic permanent magnetic materials.

J. of Applied Physics Volume 55, 1984, pages 2073-2077, describes an anisotropic alloy with fine precipitates of about 10 nm dispersed in a matrix of different chemical composition. $SmCo_5$ magnets are prepared. There are different phases between the precipitates.

J. Applied Physics Volume 57, 1985, pages 4094-4096, describes an anisotropic material. Single crystals are embedded in epoxy resin so that the grains of $Nd_2Fe_{14}B$ and of comparable material have a size of about 500 $\mu$m are separated by the plastic material.

Japanese J. of Applied Physics Volume 24, 1985, pages 699-703, describes a multiphase structure according to which there are very thin layers of bcc-phases between neighbouring grains of $Nd_2Fe_{14}B$. The bcc-phases consist of very small crystallites with the size of about 5 nm. However, the layers of bcc-phases are about 20 nm thick forming intermediate layers between the $Nd_2Fe_{14}B$ grains.

It is an object of the invention to find a structure of enhanced magnetic properties which can be produced without technical problems.

The invention is characterized in claim 1 and preferred embodiments are claimed in sub-claims.

In accordance with the invention the grain boundaries of the crystallites are substantially free of second phases and intergranular phases, respectively. There is a single phase microstructure in which the individual crystallites each have a characteristic dimension $R_o$ substantially according to the following equation:

$$R_o = a.H_e/H_a$$

wherein a is the interatomic distance

$H_e$ is the magnetic exchange field between adjacent grains and neighbouring grains, respectively, and

$H_a$ is the magnetic anisotropic field of the material.

Substantially all of the crystallites have grain sizes between 10 and 100 nm.

As a result of the inventional combination it is possible to increase the $BH_{max}$-value by a factor of 2-3 above the value predicted by Stoner-Wohlfarth.

Contrary to the limited but negative teachings of the prior art, we have been able to utilize quantum mechanical exchange coupling between crystallites to achieve enhanced magnetic properties in bulk solid materials.

According to the invention as defined in Claim 1, there is provided a class of permanent magnetic alloys which exhibit superior magnetic properties as measured in all spatial directions, that is, isotropically. The magnetic parameters are of a magnitude which the prior art teaches to be only attainable in one spatial direction, that is, anisotropically, and to be only attainable with aligned materials.

The magnetic materials of the present invention have a ratio of net remanent magnetization ($M_r$) to net saturation magnetization ($M_s$), exceeding 0.5 and approaching 1.0, in all directions, without any significant preferred crystallite orientation. This is a clear violation of the consequences of the Stoner and Wohlfarth's model and the assumptions of the prior art that the crystallites must be microscopically anisotropic crystallites that are aligned substantially in parallel within the macroscopic body in order to achieve values of Mr approaching Ms, i.e., square hysteresis loop behavior.

The herein contemplated permanent magnetic materials have magnetic retention parameters, Q, as described above, greater than 1. The theoretical limit of the magnetic retention parameter, Q, for the herein contemplated materials is believed to approach 3, rather than the theoretical values of 1.0 and 0.75 respectively, for aligned (anisotropic) and unaligned (isotropic), non-interacting materials of the prior art.

Ribbon samples of the as quenched material without further processing, exhibit remanent magnetization, $M_r$, greater than 0,9 T (9 kG) coercive force, $H_c$, greater than 0,637 MA/m (8 kOe), and preferably greater than 0,875 MA/m (11 kOe), and maximum energy product (BH)max greater than 0,119 MTA/m (15 MGOe) with similar values measured in all directions, i.e., in the plane of the ribbon and perpendicular to the plane of the ribbon. In the latter case the value was obtained after a standard correction (a geometric demagnetization factor as described, for example, in R.M. Bozorth, Ferromagnetism, D. VanNostrand Co., New York, (1951), at pages 845-847) for the shape anisotropy of the ribbon.

The saturation magnetization $M_s$ of the ribbon, i.e., the magnetization in the limit for large applied fields, e.g., an applied magnetic field above about 50 T (kG) is 15 to 16 T (kG), also in all directions. In order to directly measure saturation magnetization, $M_s$, the applied field should be at least three times the coercive force, $H_c$. Alternatively, the value of $M_s$ can be estimated based on the values thereof for compositionally similar materials. The values correspond to a value of $M_r/M_s$ greater than 0.6, and a magnetic retention parameter, Q, greater than 1, in contradistinction to the clear teachings of the prior art for a macroscopically isotropic, non-interacting material.

The as-spun ribbon material may be further processed to produce compacted magnetic bodies. It is possible that some amount of magnetic anisotropy may be created in the material as an effect of the processing steps used, which may be desirable in some applications.

The samples of the materials of the present invention made by the herein disclosed method exhibit superior relevant magnetic parameters throughout the volume of the bulk solid, evidencing quantum mechanical exchange coupling between crystallites. The properties are especially superior when compared with the properties of isotropic materials of the prior art When compared with anisotropic prior art materials, the samples of the present invention exhibit comparable magnetic properties, but were prepared without the costly, complicated alignment steps necessary in the prior art.

THE FIGURES

The invention may be understood by reference to the following figures.

FIGURE 1 is a theoretical M vs. H hysteresis loop for an isotropic material for non-interacting (solid line) and interacting (dashed line) grains for H(grain-grain) = 3,82 MA/m (48 kOe).

FIGURE 2 is a theoretical representation of $(BH)_{max}$ for an isotropic material with uniaxial grains versus a characteristic grain dimension R for exchange interacting grains.

FIGURE 3 is a theoretical representation of magnetic retention parameter Q for the isotropic material with uniaxial grains versus a characteristic grain dimension R for the material of Figure 2 with exchange interacting grains.

FIGURE 4A is a cross sectional transmission electron microscopy photomicrograph at a scale of 50 nm = 1.1 cm for a 20 x 25 cm copy, of the large grain, low energy product alloy (Sample 502AB01(4)) of Example IV.

FIGURE 4B is a hysteresis loop for the material shown in Figure 4A.

FIGURE 5A is a cross sectional transmission electron microscopy photomicrograph at a scale of 50 nm = 1.3 cm for a 20 x 25 cm copy of a small grain, low energy product alloy (Example 502AB01(8)) of Example IV.

FIGURE 5B is a hysteresis loop for the material shown in Figure 5B.

FIGURE 6A is a cross sectional transmission electron microscopy photomicrograph at a scale 50 nm = 1.3 cm for a 20 x 25 cm copy, of a high energy product material having the grain size and size distribution for quantum mechanical exchange coupling (Sample 502AB01(35)) of Example IV.

FIGURE 6B is a hysteresis loop for the material shown in Figure 6A.

FIGURE 7A is a cross sectional transmission electron microscopy photomicrograph at a scale of 50 nm = 1.65 cm for a 20 x 25 cm copy, of a high energy product material having the grain size and size distribution for enhanced magnetic properties via quantum mechanical exchange coupling (Sample 400AA10(6)) of Example IV.

FIGURE 7B is a hysteresis loop for the material shown in Figure 7A.

## DETAILED DESCRIPTION OF THE INVENTION

According to the invention as defined in Claim 1 there is provided a class of magnetic alloy materials having superior magnetic properties, methods of synthesizing the magnetic alloy materials, compacted bodies of the magnetic alloy material, and methods of forming the compacted bodies of the magnetic alloy material.

The alloy materials do not obey the Stoner and Wohlfarth assumptions of non-interacting particles. To the contrary, the individual particles or crystallites interact across grain boundaries. This interaction is a ferromagnetic exchange type interaction presumably mediated by conduction electrons.

The alloy is a substantially crystallographically unoriented, substantially magnetically isotropic alloy, with interaction between adjacent crystallites. By substantially isotropic is meant a material having properties that are similar in all directions. Quantitatively, substantially isotropic materials are those materials where the average value of [Cos $(\theta)$], defined above, is less than about 0.75 in all directions, where Cos $(\theta)$ is averaged over all the crystallites.

The materials are permanent (hard) magnets, with isotropic maximum magnetic energy products greater than 0,12 MTA/m (15 MGOe), magnetic retention parameters, Q, greater than 1.0, coercivities greater than about 0,64 MA/m (8 kOe), and remanences greater than about 0,9 T (9 kG), and preferably greater than above about 1,1 T (11 kG).

Ribbon and flake samples of the as quenched material without further processing, exhibit remanent magnetization, $M_r$, greater than 0,9 T (9 kG) coercive force, $H_c$, greater than 0,67 MA/m (8 kOe), and maximum energy product, $(BH)_{max}$, greater than 0,12 MTA/m (15 MGOe) with similar values measured in all directions, i.e., in the plane of the ribbon and perpendicular to the plane of the ribbon. In the latter case the value was after a standard correction (geometric demagnetization factor) for the shape anisotropy of the ribbon.

The saturation magnetization $M_s$ of the ribbon, i.e., the magnetization in the limit of large applied fields, is 1,5 - 1,6 T, also in all directions. These values correspond to a value of $M_r/M_s$ greater than 0.6, and a magnetic retention parameter, Q, greater than 1, in contradistinction to the clear teachings of the prior art for a macroscopically isotropic material.

The magnetic material is composed of an assembly of small crystalline ferromagnetic grains. Each grain is a single magnetic domain, i.e. all of the spins in a given grain are oriented in the same direction. Therefore, the magnetic moment of each grain can be regarded as a single giant spin (or "superspin"). Each grain has uniaxial anisotropy. That means each grain has a preferred easy axis of magnetization. The material is macroscopically isotropic. That means the direction of this easy axis is random and is

6

uncorrelated from grain to grain.

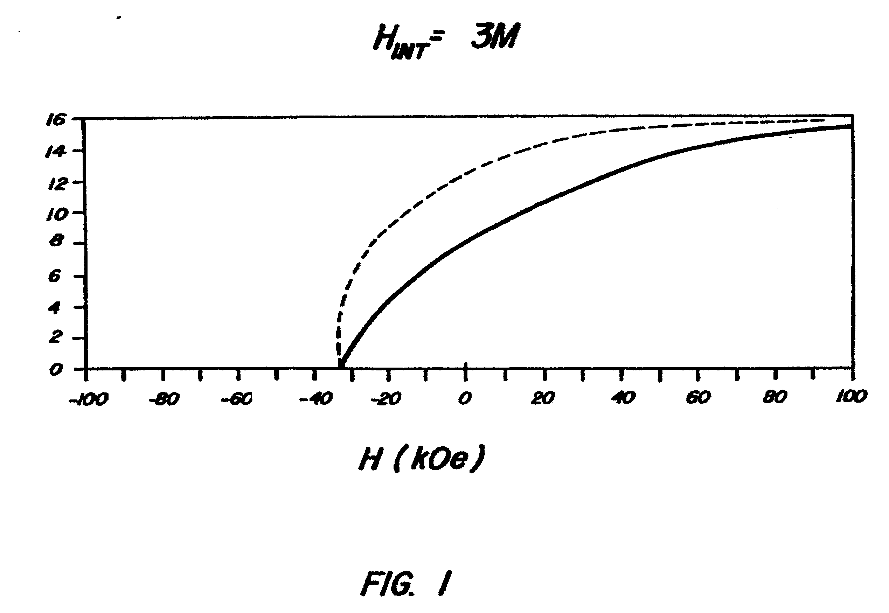

The presence of a crystallographic easy axis is associated with a magnetic anisotropy energy or field. The magnetic anisotropy energy or field tends to try to keep the spin aligned with the easy axis. For $Nd_2Fe_{14}B$, this anisotropy field has been reported to be H anisotropy = 5,57 MA/m (70 kOe) see, e.g., the review article, J.B. Livingston, Iron - Rare Earth Permanent Magnets, Paper, No. VI-1, 8th International workshop on Rare Earth Magnets and their Applications, Dayton OH, 6-8 May 1985. (Proc: Univ. of Dayton, Magnetics, KL-365, Dayton OH, 45469, USA) Since the anisotropy field acts on every spin in the grain, it is essentially independent of the grain size. For this reason, the simple model of domain reversal of Stoner and Wohlfarth, above, can be used to calculate the expected theoretical hysteresis loop for the randomly isotropic assembly of noninteracting anisotropic grains. The Stoner and Wohlfarth model, above, neglects the effects of inter-grain interaction, which can be substantial. For Ha = 5,57 MA/m and saturation magnetization Ms = 1,6 T, the hysteresis loop calculated using the model of Stoner and Wohlfarth, above, is associated with a maximum magnetic energy product of approximately $BH_{max}$ = 0,118 MTA/m (14 MGOe), a remanence of Mr = 0,8 T (8 kG) and a coercive force of 0.48 x $H_{anisotropy}$ = 2,7 MA/m (34 kOe) as shown in Figure 1. This corresponds to a magnetic retention parameter of Q = 0.75.

The grains are in intimate structural and metallic contact along their surfaces, i.e., along their grain boundaries.

Thus, the spins on the surface of a given grain interact ferromagnetically via quantum mechanical electronic exchange with the spins on the surface of the neighboring grains. This is the same quantum mechanical interaction that gives rise to the basic ferromagnetic alignment within the grain. This surface exchange interaction results in an effective coupling between superspins.

Within a simplified model (Mean Field Theory) the exchange interaction can also be treated as an effective magnetic field acting on the individual grain. For crystalline iron, a standard calculation of the exchange field on the atomic level reported in Kittel, Introduction To Solid State Physics (3rd Ed.), gives the value of 796 MA/m (10 MOe). This value of 796 MA/m (10 MOe) assumes that all of the spins around a given iron atom are aligned in the same direction. Since this exchange field is proportional to the Curie temperature Tc (which is 1100°C for Fe and 600°C for $Nd_2Fe_{14}B$), the atomic-level value of the exchange field for $Nd_2Fe_{14}B$ is calculated to be about H(spin-spin) = 477 MA/m (6 MOe).

To calculate the effective interaction field acting on the larger scale between grains, [H(grain, grain)] it is necessary to use a simple scaling argument. The intergranular interaction is a surface phenomenon. Therefore H(grain, grain) is proportional to the ratio of surface to volume. Therefore, on the scale of a grain size R, the effective superspin interaction field should be H(grain, grain) (R) = H(spin,spin) times (a/R), where a is a typical Fe-Fe interatomic distance (about H(grain, grain) will equal H(anisotropy) = 5,57 MA/m 0,25 nm at a scale $R_o$ = [H(spin,spin)/Hanisotropy] x a = 20 nm for $Nd_2Fe_{14}B$. This scale is believed to approximate the grain size for optimum magnetic performance as described below.

The degree of magnetic enhancement is determined by the size and size distribution of the grains relative to this characteristic scale.

The large grain limit corresponds to the case of a high fraction of grains having a grain size larger than $R_o$. That is, in this case H anisotropy is much larger than H(grain, grain), the interaction is so weak that it has little effect. Thus, the magnetic parameters are essentially the same as for the noninteracting case. Additionally, if some of the grains are large enough to contain multiple domains the grain then splits into multiple domains resulting in a substantial reduction of coercivity and magnetic energy product.

In the small grain limit, there is a high fraction of grains below a grain size of the diameter $R_o$ of the grain. In this case H(grain, grain) is much greater than H anisotropy, the interaction field is dominant, and the magnetic moments of adjacent grains are essentially locked together. This increases Mr to almost Ms. The effective domain size actually covers a large number of highly correlated grain moments. That is, a single magnetic domain actually encompasses a plurality of individual grains. Because this superdomain contains many grains with randomly distributed easy axes, the anisotropy of the domain is averaged out to nearly zero. As a result, the coercive force Hc is also small. Therefore, in the small particle size regime, BHmax is very small, independent of the value of Mr.

In the intermediate regime, for grain sizes about R = 20 nm, the interaction acts to pull the moments of superspins together, without significantly lowering the coercive force. Thus both Mr and $(BH)_{max}$ can be substantially enhanced, and an estimate of the magnitude of this effect can be determined by a simple model described below.

In this case the grain-grain interaction field due to surface exchange, H(grain,grain) between adjacent crystallites substantially equals the magnetic anisotropy energy of the individual crystallites.

We can treat the interaction enhancement within a mean-field approach, analogously to the Weiss molecular field model for ferromagnetism (see e.g. Kittel, Introduction to Solid State Physics, 3rd Ed, pp.455-458). This is similar to the treatment given by Callen et al, above. Since not all of the grains are aligned, the average total interaction field acting on a given grain is

Hinteraction = H(grain,grain) x (M/Ms).

The effect of the interaction on the hysteresis loop can be calculated by realizing that a given particle "sees" the total effective field,

Heffective = Hinteraction + Happlied.

M vs. Heffective should then be the same as for the non-interacting case, and one can then transform back to M vs. H applied (vice M vs. Heffective) by "skewing" the curve. This "skewing" is carried out in a way that is identical to the standard treatment of demagnetizing fields, here corresponding to a negative demagnetizing coefficient of -H(grain,grain)/Ms (see dashed line in Figure 1 where H(grain-grain) = 3,8 MA/m (48 kOe).

This mean field model suggests (incorrectly) that both the remanence and energy product increase indefinitely as H(grain,grain) increases. This is a typical failure of mean field models when applied outside their range of validity. The mean field model assumes that the magnetic moments of the grains around a given central grain are independent of the magnetic moment of that grain. This will only be true when the interaction is weak; when the interaction is strong (i.e. when H(grain,grain) is greater than H(anisotropy), there will necessarily be correlations in magnetic moment between adjacent particles. These correlations cannot be treated within a mean field model. We know of no published model that can solve the problem in the cross over to the small grain limit.

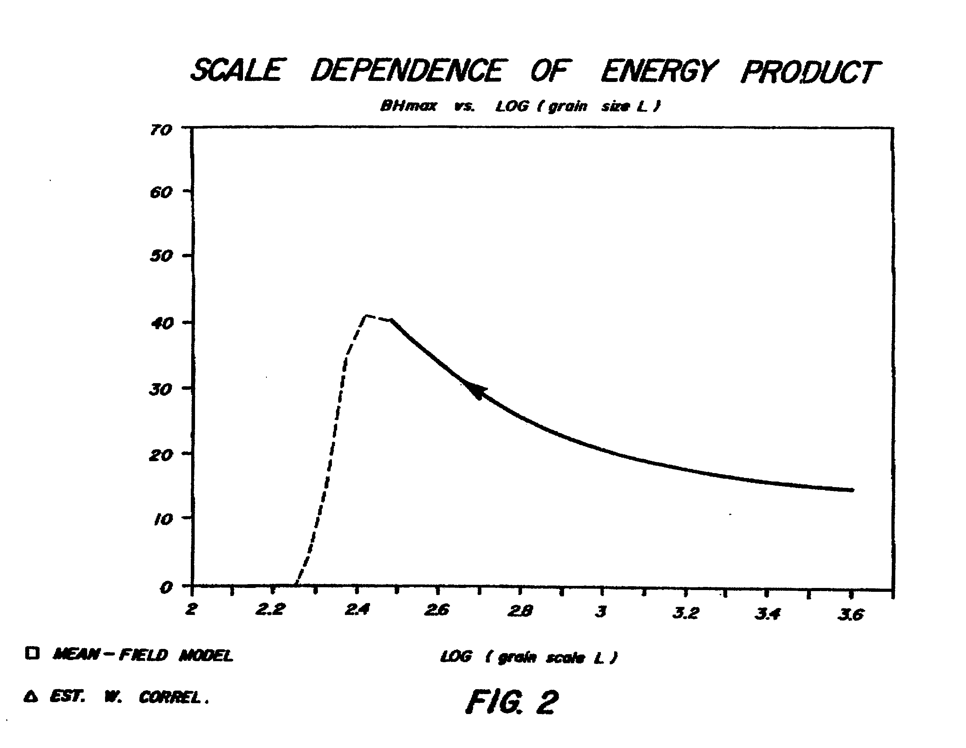

However, it is still possible to estimate the energy product from the curve in Figure 1, as a function of the interaction field and hence of the scale length $R_o$ (see Figure 2). The dashed line giving the sharp rise at about 20 nm is an estimate which is believed to be qualitatively correct.

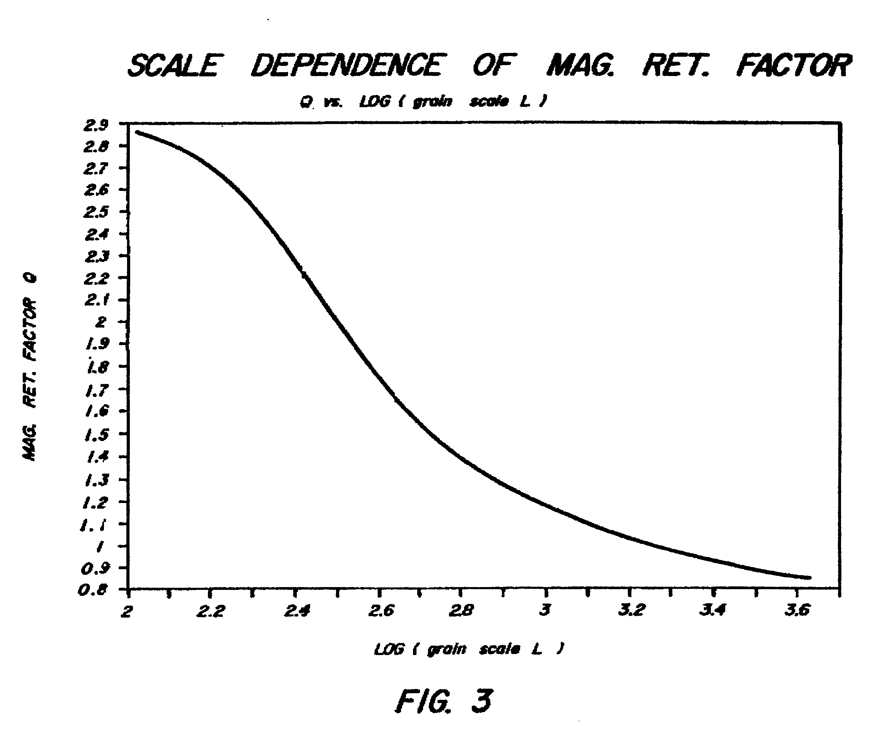

Within this simple mean field model with qualitative corrections, energy products up to 316 kTA/m (40 MGOe) or more may be possible in the $RE_2TM_{14}B_1$ system. This corresponds to values of the magnetic retention parameter Q approaching 3. See Figure 3.

The scaling argument above assumes that all the grains are essentially the same size, with the same interactions between them. Since the enhancement is associated with correlated behavior on the grain scale, the distribution of both grain and intergrain geometries, including grain size and grain size distribution, is absolutely crucial for this enhancement to work effectively. If the optimum-size grains are in contact with smaller grains, the smaller grains will tend to cause a reduction in the coercive force, making the optimum performance difficult or even impossible to realize. In any real system, of course, there will be distributions in grain sizes and shapes, as well as distributions in intergrain exchange coupling due to grain-boundary inclusions and minority phases. All these imperfections will tend to degrade the optimum performance, and the optimum average size in a real material may be shifted from the optimum given above.

While the above illustrations of the quantum mechanical exchange coupling across grain boundaries have been quantitatively described with respect to rare earth-transition metal-boron materials of tetragonal, $P4_2/mnm$ crystallography (crystallographic symbol for the symmetry and location of atoms in a Nd-Fe-B magnet), especially the $Nd_2Fe_{14}B_1$ type materials, this is a general phenomenon applicable to other systems as well. The optimum characteristic size, namely the crystallite diameter $R_o$, however, may be different in these other cases.

We expect that for $Pr_{2-x}Nd_xFe_{14}B_1$, $R_o$ will be approximately 20 nm for all values of x. For $SmCo_5$, for example, where Curie temperature, Tc = 900 K, saturation magnetization, Ms = 1,2 T (12 kG) and Hanisotropy = 23,8 MA/m, H(spin,spin) = 716 MA/m, so that

$$R_o = \frac{716 \ MA/m}{23,8 \ MA/m} \quad 0,25 \ nm = about \ 8 \ nm$$

Similarly, for $Sm_2Co_{17}$

$$Ro = \frac{955 \text{ MA/m}}{6,4 \text{ MA/m}} \qquad 0,25 \text{ nm} = about \quad 40 \text{ nm}$$

For randomly-oriented crystallites at the optimum size, the expected magnetic enhancement attributable to quantum mechanical magnetic coupling is comparable to that estimated above for $Nd_2Fe_{14}B$ type material - an increase in $BH_{max}$ by a factor of 2 to 3 above that predicted by the Stoner and Wohlfarth model, above.

In one exemplification the magnetic alloy material is an alloy of iron, optionally with other transition metals, as cobalt, a rare earth metal or metals, boron, and a modifier. In another exemplification the magnetic alloy material is an alloy of a ferromagnetic transition metal as iron or cobalt, with an lanthanide, as samarium, and a modifier.

A modifier is an alloying element or elements added to a magnetic material which serve to improve the isotropic magnetic properties of the resultant material, when compared with the unmodified material, by an appropriate processing technique. Exemplary modifiers are silicon, aluminum, and mixtures thereof. Alternative or additional modifiers may include lithium, hydrogen, fluorine, phosphorous, sulfur, germanium, and carbon. It is possible that the modifier acts as a grain refining agent, providing a suitable distribution of crystallite sizes and morphologies to enhance interactions.

The amount of modifier is at a level, in combination with the quench parameters, to give the above described isotropic magnetic parameters and the below described x-ray pattern.

While the alloys referred to herein have modifiers, which are believed to control grain nucleation and growth, the crystallite size and size distribution may be obtained by proper choice and control of the solidification technique employed. For example, such solidification methods as gas atomization, metallization, chemical vapor deposition, and the like may be used as an alternative to rapid solidification from the melt. The modifier acts during solidification from the liquid state, or during grain nucleation and growth from the amorphous state, e.g., as a grain refining agent or a nucleating agent, to provide the distribution of crystallite size and morphology necessary for enhanced properties.

The magnetic alloy may be of the type [Rare Earth Metal(s)]-[Transition Metal(s)]-[Modifier(s)], for example
[Sm]-[Fe, Co]-[Si, Al].

Another interacting alloy may be of the type [Rare Earth Metal(s)]-[Transition Metal(s)]-Boron-[modifier(s)], for example
[Rare Earth Metal(s)]-[Fe,Co]-Boron-[modifier(s)], and [Rare Earth Metal(s)]-[Fe,Co,Mn]-Boron-[modifier(s)].

For example, the magnetic alloy material has the stoichiometry represented by:

$(Fe,Co,Ni)_a(Nd,Pr)_bB_c(Al,Si)_d$,

exemplified

$Fe_a(Nd,Pr)_bB_c(Al, Si)_d$,

where a, b, c, and d represent the atomic percentages of the components iron, rare earth metal or metals, boron, and silicon, respectively, in the alloy, as determined by energy dispersive spectroscopy (EDS) and wave length dispersive spectroscopy (WDS) in a scanning electron microscope;

$a + b + c + d = 100$;

a is from 75 to 85;
b is from 10 to 20, and especially from 11 to 13.5;
c is from 5 to 10;
and d is an effective amount, when combined with the particular solidification or solidification and heat treatment technique to provide a distribution of crystallite size and morphology capable of interaction enhancement of magnetic parameters, e.g., from traces to 5.0.

The rare earth metal is a lanthanide chosen from neodymium and praseodymium, optionally with other lanthanides (one or more La, Ce, Sm, Eu, Gd, Tb, Dy, Ho, Er, Tm, Yb and Lu), Sc, Y, and mixtures thereof present. While various combinations of the rare earth metals may be used without departing from the concept of this invention, especially preferred rare earth metals are those that exhibit one or more of the following characteristics: (1) the number of f-shell electrons is neither 0 (as La), 7 (as Gd) or 14 (as Lu), (2) low molecular weight lanthanides, such as La, Ce, Pr, Nd, and Sm, (3) high magnetic moment lanthanides that couple ferromagnetically with iron, as Nd and Pr, or (4) relatively inexpensive lanthanides, as La, Ce, Pr, and Nd. Especially preferred are Nd and Pr. Various commercial and/or byproduct mischmetals may be used. Especially preferred mischmetals are those rich in Nd and/or Pr.

The interacting $RE_2Fe_{14}B$-Si alloys of the invention have a crystallographic structure having a Rietveld refined x-ray powder diffraction pattern consistent with the presence of a major portion of a tetragonal rare earth - iron - boron type phase, modified in atomic occupancy and lattice parameters from the prior art rare earth - iron - boron type material by the presence of a modifier, as Si and/or Al.

While the structural differences between the magnetic materials of the invention and the prior materials are subtle, they are believed to be critical when combined with the proper microstructure for the interaction to be effective for bulk permanent magnetic materials at standard temperature and pressure.

One exemplification of the hard magnetic alloy material has a crystallographic structure exhibiting a Rietveld refined x-ray powder diffraction pattern consistent with the presence of a major portion of a tetragonal phase with the structure $P4_2/mnm$, and composed of RE-Fe-B, RE-Fe-B-Si, RE-Fe-B-(Si,Al), or RE-Fe-B-Al, and possibly of a body centered cubic phase having lattice parameters consistent with an alpha-iron type phase, and other exsolved phases below the level of detection of x-ray diffraction. Additionally, the Rietveld refined x-ray powder diffraction pattern is consistent with a shift in the boron position relative to that in the unmodified material, such shift increasing with increasing Si content at the Si concentrations of interest.

These observations are not inconsistent with the modifier, e.g., Si, substituting for Fe in the tetragonal RE-Fe-B lattice, and the modifier acting as a grain refiner to modulate the competing rates of nucleation and grain growth to result in the crystallographic dimensions necessary for magnetic interactions between adjacent crystallites.

Rietveld analysis is described by R.A. Young and D.B. Wiles in Application of the Rietveld Method for Structure Refinement With Powder Diffraction Data, Adv, in X-Ray Anal., Vol. 24, pp. 1-24 (1981); and in Profile Shape Functions in Rietveld Refinements, J. Appl. Cryst., Vol. 15, pp. 430-438 (1982).). Rietveld analysis starts with powder diffraction data, e.g., x-ray diffraction data or neutron diffraction data, and produces refined values of the structural parameters therefrom. Rietveld analysis uses least squares methodology to obtain a best fit between the entire calculated powder diffraction patterns as a whole. In this way, it is possible to obtain such structural parameters as atomic co-ordinates, thermal motion, and site occupancy parameters.

As described by Young and Wiles, above, no initial attempt is made to allocate intensities observed in the powder diffraction pattern to particular Bragg reflections, nor to resolve overlapped reflections. Instead, the expected powder diffraction pattern versus angle $2\theta$ is calculated from models of the crystal structure. Next, the difference between the observed and calculated powder diffractions is used to calculate parameter shifts that improve the fit. This is continued, using every bit of observed intensity information.

One typical magnetic alloy material of the invention has $P4_2/mnm$ tetragonal crystallography, with the occupancies, crystal lattice parameters, and scale factors, based on Rietveld refinement of x-ray diffraction data, shown in Table I :

Table I

Rietveld Refined
Parameters

of

High As Quenched Energy Product
Nd-Fe-B-Si Alloy
(12.7 At % Nd, 79.6 At % Fe, 6 At % B, 1.7 At % Si)
376AV08

| Atom | x | y | z | n |
|---|---|---|---|---|
| Nd(1) | 0.2736(8) | 0.2736(8) | 0.0000 | 0.24(1) |
| Nd(2) | 0.1417(8) | 0.1417(8) | 0.0000 | 0.23(1) |
| Fe(1) | 0.2220(3) | 0.5653(13) | 0.5653(13) | 1.05(4) |
| Fe(2) | 0.0380(11) | 0.3577(12) | 0.1762(9) | 1.11(4) |
| Fe(3) | 0.1063(14) | 0.1063(14) | 0.273(12) | 0.50(2) |
| Fe(4) | 0.3141(10) | 0.3141(10) | 0.2603(13) | 0.55(2) |
| Fe(5) | 0.5000 | 0.5000 | 0.1150(24) | 0.23(1) |
| Fe(6) | 0.0000 | 0.5000 | 0.0000 | 0.2500 |
| B(1) | 0.339(13) | -0.339(13) | 0.0000 | 0.28(8) |

c axis (nm) 1.2 203 - 1,2 221
a axis nm 0,8 796 - 0,8 801
Scale factor (rare earth - iron - boron phase to $\alpha$-iron) 74.29/1

Rietveld refined x-ray diffraction results on ribbon material indicated the material was substantially isotropic. Additions of silicon are seen to correlate with the progression shift of the boron lattic position within the tetragonal rare earth - iron - boron lattice, with respect to the Rietveld refined neutron diffraction data of J.F. Herbst, J.J. Croat, and W.B. Yellon, Structural And Magnetic Properties of $Nd_2Fe_{14}B$, J. Appl. Phys., Vol. 57, No. 1, pp. 4086-4090 (April 1985) for the silicon-free rare earth - iron - boron tetragonal material. This is outside the range of experimental error, and is consistent with a non-interstitial location of silicon in the lattice.

One means of producing the above described, magnetic alloy having magnetic isotropy and the above crystallographic properties is by melt spinning, i.e., rapidly solidifying and quenching molten alloy material onto a moving chill surface, e.g., a rotating chill surface means.

The quench parameters may be controlled to direct the solidification front, control its velocity, and control grain coarseness.

The alloy is quenched at an appropriate rate to result in morphological, crystallographic, atomic, and electronic structures and configurations that give rise to the novel interactive magnetic properties. The quench parameters are carefully controlled to produce an appropriate fine grained structure, which, together with the aforementioned modifier, results in the desired permanent magnet material.

Alternatively, the alloy may be quenched at a rate sufficient to produce a precursor microstructure, which, when appropriately heat treated, results in a structure exhibiting the above described improved magnetic parameters. These flakes are much larger then the characteristic crystallite diameter $R_o$. A typical

flake may contain at least $10^8$ grains of characteristic grain size and crystallite diameter $R_o$, resp.

Individual melt spun fragments are recovered as product from the melt spinning process. Individual particles can also be obtained by the comminution of the ribbon fragments which are generally relatively brittle. The ribbon fractures, yielding particles, e.g., flake like particles, or plate like individual particles.

A practical advantage of the particulate magnetic material is the ease of subsequent formation and fabrication into an end-use product. Since the magnetic particles of the present invention are isotropic in their magnetic behavior, they can be pressed and compacted without regard for any particular crystalline orientation and/or magnetic alignment. Thus, ribbon material can be further reduced in size to , e.g., 0.5 millimeter in the largest dimension, cold pressed, and bonded. In this way, magnetic powder densities above about 70 percent may be obtained, with $(BH)_{max}$ values greater than 50 percent of the original, fully dense starting material.

The magnetic materials of the invention can be pressed to above about 90 percent of theoretical density, without a magnetic alignment step, while still retaining the enhanced magnetic properties of the material.

The resulting compacted, consolidated, hard magnetic bodies typically have an isotropic magnetic energy product of about 0,12 MTA/m (15 MGOe) or more, and a magnetic retention parameter, Q, greater than 1.

The invention may be understood by reference to the following examples.

EXAMPLES

A. Summary of Test

In obtaining the results in the following examples, a macroscopically homogeneous ingot (mother alloy) was first prepared by melting together the proper mixture of iron, neodymium, praseodymium, boron, silicon, and aluminum. Thereafter, portions of each ingot were melted and rapidly quenched using melt-spinning to form fragments of ribbon. These as-quenched ribbon samples were individually weighed and measured magnetically, generally using a large pulsed field to pre-magnetize the samples. In some cases, the ribbon samples were subjected to further heat-treatment and subsequently remeasured magnetically. Both the ingot and the final ribbon samples were examined in a scanning electron microscope for microstructure and elemental composition. Furthermore, several samples, both as large ribbon fragments and as powder, were further analyzed for crystallographic structure using x-ray diffraction together with the Rietveld refinement technique. Some batches of ribbon samples were further crushed and compacted into magnetic bodies, and subsequently remeasured magnetically.

B. Preparation of the Ingot (Mother Alloy)

The precursor or mother alloys were generally prepared from the elemental components: iron (99.99% pure electrolytic iron flake), boron (99.7% crystalline boron), Nd and Pr pure rods (99.9% rare earth metals), and silicon (99.99% Si crystals). In some cases, higher purity material was used. In other cases, commercial-grade rare-earth products were used, containing up to 15 weight % iron and up to several weight % of rare earths other than Nd and Pr. The components were weighed out in appropriate proportions, and melted together either by arc-melting on a cooled copper hearth, or by rf induction heating in a crucible consisting either of fused quartz or sintered magnesium oxide ceramic. Arc-melted samples were melted and turned six times, while induction-melted samples were held at a temperature above about 1400°C for 30 minutes to 2 hours, with enough churning in the melt to obtain a macroscopically homogeneous alloy. After solidifying and cooling, the ingot was recovered from the crucible, an outer skin of reaction product was removed, and the ingot broken up into particles of characteristic dimension about 1 cm. Composition checks were made on samples of the ingot material to check for homogeneity.

C. Preparing the Quenched Ribbon

Preparing the quenched ribbon from the ingot was performed in one of three melt-spinning systems. Two of these are simple box spinners with copper wheels 25 cm in diameter and 2,5 cm thick (the 10" spinner) and 30 cm in diameter and 5 cm thick (the 12" spinner), respectively. The chambers are suitable for evacuation and subsequent back-filling with an inert processing atmosphere. The crucible in these spinners is unshielded. In the third system (the 20" spinner), the copper wheel is a shell 50 cm in outer diameter, 10 cm wide, and 7,5 cm thick. This wheel is contained within a chamber continuously flushed with an inert process gas. The crucible is enclosed in a shroud of flowing inert gas. In the counter-rotation direction from the crucible, a flow of inert gas counteracts the gas dragged along by the surface of the wheel. In all three systems, the spinner wheel was typically rotated with a surface velocity in the range between 15 and 30 m/s

For the 30 cm (12") and 50 cm (20") spinners, the crucible is a clear fused quartz cylinder 45 mm inside diameter by about 40 cm long, while for the 25 cm (10") spinner the crucible is similar but with dimensions 17 mm inside diameter by 25 cm long. The crucible orifice was typically a circular hole in the bottom between 0.5 and 1.5 mm in diameter, and the crucible was positioned with the orifice 5 to 10 mm from the wheel surface.

Several chunks of ingot alloy were melted in the crucible using a 450 kHz induction furnace (or a 10 kHz induction furnace for the 30 cm (12") spinner) until the desired temperature (typically of order 1200 - 1300° C) was reached, as determined using an optical pyrometer. With rf heating still being supplied, the crucible was then pressurized with inert gas, forcing a jet of molten metal through the orifice onto the rotating wheel. The ejection continues until the crucible is empty, or alternatively until not enough molten metal remains in the crucible to couple the rf heating efficiently, and the orifice clogs. In some cases, partial or complete orifice clogging may occur earlier in the run, due to e.g., splashback of the molten metal onto the crucible. Factors such as these may account for some irreproducibility in final material properties for similar nominal process parameters.

## D. Microstructure and Composition

Samples of both ingot material and quenched ribbon were examined in a JEOL scanning electron microscope for microstructure and composition. Generally, samples were mounted using standard metallographic procedures, and polished before examination. In some cases, ribbon samples were etched in 2% nitric acid in ethanol in order to further define the grain structure. Composition was measured using energy dispersive x-ray spectroscopy (EDS) to measure Fe, Nd, Pr, Si and Al concentrations, and wavelength-dispersive x-ray spectroscopy (WDS) to determine the baron concentrations. In either case, the composition was probed to a depth of a $\mu$m or less. On the transverse scale, one could probe either a small area of order one $\mu$m$^2$, or a larger area using scanning to determine average compositions. This is particularly important for the ingot material, which exhibits substantial phase segregation on the 10-100 $\mu$m scale. For the optimum magnetic ribbon material, very little phase separation was visible, with the primary phase apparently homogeneous with no resolvable grain structure down to at least 0,2 $\mu$m. Preliminary Transmission Electron Microscopy analysis is discussed in Examples I and IV.

## E. Crystalline Structure And Rietveld Refinements

The crystallographic structure of the ingot material and the subsequent ribbon was determined using x-ray diffraction techniques. Measurements were carried out in a Norelco (Phillips) powder diffractometer using Cu K-alpha radiation (wavelength 0,154 nm). A graphite reflected-beam monochromator was used to eliminate background due to Fe fluorescence. The x-ray source used an excitation voltage of 40 kV and a current of 20 mA Conventional $\theta$-2-$\theta$ x-ray powder diffraction scans were analyzed for peak position and intensity to confirm the crystal structure of the material. The numerical output of high precision step scans with 200 s per step and 0.05 degrees per step were further computer-analyzed using the Rietveld powder-pattern refinement technique, to determine the exact lattice parameters and atomic positions and occupancies of the main $Nd_2Fe_{14}B$-type structure for selected materials. This refinement technique also indentified quantitatively a small quantity of bcc alpha-iron.

## F. Magnetic Measurements

Measurements of magnetic properties were made using a Model 9500 computer-controlled vibrating-sample magnetometer (VSM) manufactured by LDJ, Inc., having a maximum applied magnetic field of 1,75 MA/m (22 kOe). The values of magnetic field H were determined under feedback-control with a calibrated Hall probe. The measurement software was modified in-house to permit measurement of both major and minor hysteresis loops of permanent magnet materials with high coercive forces. Before every set of measurements, the calibration of the magnetization M was checked using a standard (soft magnetic) nickel sphere (from the U.S. National Bureau of Standards) of measured weight. The calculation of the magnetization of the magnetic materials required a measurement of the sample mass (of order one milligram or less for a typical ribbon fragment of order 5 mm long by 2 mm wide by 30 to 50 $\mu$m thick) using a Cahn-21 automatic electrobalance (with precision to 1 microgram), and an estimate of the density. For the materials in the examples to be presented below, the density was consistently taken to be 7.4 g/cm$^3$, slightly smaller than the value of 7.6 g/cm$^3$ appropriate for pure stoichiometric $Nd_2Fe_{14}B$. Had we used the larger density, the calculated values of magnetization would have been increased proportionately over those we report in the examples below.

Each magnetic ribbon sample was mounted using adhesive tape onto a sample-holding rod. In general, the sample was pre-magnetized in a given direction using a pulsed magnetic field (of peak magnitude up to 9,6 MA/m (120 kOe)) produced by an LDJ Inc. capacitance discharge magnetizer. This was often necessary to achieve proper magnetic measurements of the high-performance permanent magnet material of the invention, since the maximum field of the VSM magnet was generally insufficient to obtain complete saturation of the magnetic moments. Following this, the sample was mounted in the gap of the magnet of the VSM and positioned at the saddle point of the detection coils. Following standard procedures, pre-magnetized samples were saddled in zero applied field, while un-magnetized (virgin) samples were saddled in a 0,4 MA/m (5 kOe) field. The measurement was carried out by ramping the field from zero to a maximum (typically 1,75 MA/m), through zero again to a negative maximum, and then back through zero to the positive maximum again, while the entire hysteresis loop was recorded (magnetization M vs. applied magnetic field H). The program then determined the chief magnetic parameters: the remanent magnetization or remanence M (the positive y-intercept of the hysteresis curve), measured in units of Tesla (kilogauss), the intrinsic coercive force or coercivity $H_c$ (the negative x-intercept of the hysteresis curve), measured in units of MA/m (kilooersteds), and the maximum energy product (the maximum negative value of the product of the induction $B = H + M$ and the field H), measured in units of kTA/m (megagaussoersteds).

In most of the following examples, ribbon samples were measured magnetically along three orthogonal directions: first, in the "x-direction", in the plane of the ribbon parallel to the spin direction (parallel to the length), second, the y-direction, in the plane of the ribbon perpendicular to the spin direction (parallel to the width), and finally in the z-direction, perpendicular to the plane of the ribbon. In each case, the sample was pre-magnetized in the appropriate direction using the pulsed magnetic field. For the perpendicular z-direction, a standard software-correction was made for the demagnetizing effect of the ribbon geometry. Generally, a demagnetizing coefficient N = 0.75 was found to be provide a reasonable correction. Had the larger value N = 1.0 been used, which is more common for measurements perpendicular to a thin plate, the inferred magnetic measurements would have been even higher than those stated in the below examples (but the hysteresis loops would appear to have an unphysical shape). The value of the magnetic retention parameter, Q, is calculated using N = 0.75 for the z direction.

The value of the magnetic retention parameter

$$Q = Sum_{x,y,z} (M_r/M_s)^2$$

is calculated using N = 0.75 for the z-direction. In all the examples the theoretical maximum of 1,6 T (16 kG) is used for $M_s$. The applied magnetic field necessary to fully saturate these materials should not be underestimated. In particular, once a virgin (unmagnetized) sample has been magnetized in an arbitrary direction, it is often extremely difficult to completely re-magnetize it in another direction. Examples of this magnetic training effect are discussed below.

EXAMPLE I - Sample 471 and 477 Series

The ingots were consolidated by arc melting buttons of alloy in high purity argon (99.98%). The starting materials were high quality: Fe 99.99%; Nd 99.9%; B 99.7%; and Si 99.99%. Each alloy button was remelted and inverted five times. A Zr getter (for oxygen) was used and showed no visible contamination.

Pieces of the ingot and twins of the magnetically measured melt-spun ribbons had their compositions measured by energy dispersive scanning electron microscopy. A "twin" is a fragment broken off next to the bit of magnetically measured ribbon, and is therefore assumed to have essentially the same composition and microstructure. These results are listed below:

| Examples | Fe | Nd | Si | B |
|---|---|---|---|---|
| Ingot: 471AC | 80.5 | 13.5 | 0 | 6 |
| Ingot:471AD | 79.6 | 14.4 | 0 | 6 |
| Ribbon:471AC01(3) | 79.6 | 13.2 | 1.2 | 6 |
| Ribbon:471AC01(4) | 79.5 | 13.1 | 1.4 | 6 |

[471AC alloy picked up about 1.3 at % Si subsequent to melt-spinning]

| | | | | |
|---|---|---|---|---|
| Ingot:477AB | 78.2 | 14.2 | 1.6 | 6 |
| Ribbon:477AA01(5) | 77.8 | 13.9 | 2.3 | 6 |
| Ribbon:477AA01(4) | 80.6 | 10.7 | 2.7 | 6 |
| Ribbon:477AA01(1) | 76.4 | 14.1 | 3.5 | 6 |

[477AA picked up about 1.2 at % Si subsequent to melt-spinning]

Each ingot was spun under identical conditions, except for the wheel speed which had the surface speeds of 20, 25 and 30 m/sec. The conditions are listed below.

| | | |
|---|---|---|
| Crucible Type | : | Quartz |
| Crucible Diameter | : | 17mm (inside diameter), 19mm (outside diameter) |
| Crucible Orifice Diameter | : | 1mm |
| Crucible Pressurizing Gas | : | Argon |
| Crucible Discharge Pressure | : | 0,14 bar |
| Crucible Wheel Distance | : | 8mm |
| Crucible Axis | : | Perpendicular (90$^{\circ}$) |
| Wheel Type | : | Cu |
| Wheel Diameter | : | 25 cm |
| Wheel Smoothness | : | #600 Grit |
| Chamber Gas | : | Argon |
| Chamber Pressure | : | 0,8 bar (1 Atmosphere) |
| Charge Amount | : | 18-21 g |
| Means of Melting | : | R.f. induction at 400 kHz |
| Heat Up Time | : | 30-50 s |
| Ejection Temperature | : | 1350$^{\circ}$C [optical pyrometer with emissivity set at 0.55] |
| Spin Time | : | 2 - 4 s |

It is important to note that the melt-spun ribbon is consistently higher in Si content than the ingot. The molten alloy acquires this Si from the quartz crucible. This points out the need to measure the composition at each stage of the fabrication.

The average values of the magnetic properties were obtained from 3 distinct runs wherein each consisted of 10 separate ribbon pieces stacked together. For each measurement the ribbons were magnetically pulsed three times at 9,55 MA/m (120 kOe) for 1 ms. The magnetization measurements were performed in a VSM with a maximum applied field of 1,75 MA/m.

Applied field in plane of ribbon parallel to spin direction.

| Sample No. | Wheel Speed (m/s) | $(BH)_{max}$ (MTA/m) | $H_c$ (MA/m) | $M_r$ (T) | Ribbon Thickness (mm) | Ribbon Width (mm) |
|---|---|---|---|---|---|---|
| 471AB01 | 20 | 0,114 +.6 | 1,28 +.3 | 0,91 +.1 | 41+16 | 1.5+.6 |
| 471AC01 | 25 | 0,148 +1.2 | 0,98 +.2 | 1,05 +.2 | 33+8 | 1.4+.4 |
| 471AD01 | 30 | 0,117 +1.2 | 1,31 +.5 | 1,04 +.1 | 30+8 | 1.3+.3 |
| 477AA01 | 20 | 0,103 +1.6 | 1,38 +.5 | 0,92 +.3 | 42+7 | 1.8+.3 |
| 477AB01* | 25 | 0,098 +1.3 | 1,34 +.6 | 0,92 +.1 | | |
| 477AD01 | 25 | 0,120 +2.7 | 1,42 +.8 | 0,92 +.4 | 37+11 | 1.5+.4 |
| 477AC01 | 30 | 0,092 +1.6 | 1,30 +.6 | 1,01 +.2 | 35+11 | 1.7+.8 |

*During this melt-spinning run the orifice became obstructed and clogged.

The data above exhibit a peak in the energy product with respect to wheel surface speed. The optimal wheel velocity is 25m/s for a 25 cm diameter wheel.

Correlation between Microstructure and
Magnetic Properties

| Sample No | $(BH)_{max}$ (MTA/m) | Hc (MA/m) | $M_r$ T | Microstructure |
|---|---|---|---|---|
| 471AC01(3) | 0,2 | 1 | 1,1 | Only homogeneous |
| 477AA01(5) | 0,17 | 1,4 | 1,03 | fine grain morphology |
| 471AD01(4) | 0,09 | 1,2 | 0,9 | Consists of small |
| 477AA01(3) | 0,05 | 0,88 | 0,85 | and large grain regions |

The fine grain region (located on the wheel side of the melt-spin ribbon) was not resolved by polishing and etching, e.g., in 1 to 2 percent nitric acid in ethanol, but was determined to be less than 200 nm This fine grain region is identified to be the good magnetic material, i.e., having a high energy product and high remanent magnetization.

The other two samples exhibit a superposition of the good and inferior magnetic material (the latter being identified with the large grain zone found on the free side of the ribbon) as shown in the magnetization curves.

Preliminary analysis using a high resolution scanning transmission electron microscope (STEM) has been carried out on a magnetic ribbon fragment which is a "twin" of sample #477AD01(1) whose quench parameters and magnetic performance were reported above.

The ribbon sample was mounted using standard micrometallographic techniques, and an ion-beam etcher was used to thin part of the sample down to about one thousand angstroms. Observations were made on the two ribbon surfaces (after argon ion etching away the top half micron), the wheel side and the free side.

The microstructure on the wheel side consisted primarily of very small equiaxed grains of the main tetragonal phase (with rare-earth to iron ratio consistent with $Nd_2Fe_{14}B$), with grain sizes in the range from 10 - 100 nm, that were found by electron diffraction to be randomly oriented. There was also a small fraction of grains of $\alpha$-iron, of typical size 50 nm or more. On the boundaries between the larger grains of the main tetragonal phase, there was some evidence of an additional phase or phases present as spherical inclusions relatively richer in Neodymium and Sulfur than the main phase. Sulfur was not previously believed to be a constituent of the materials. The location of the Si remained difficult to determine.

On the free side of the ribbon, the grains of the main phase were much larger, with diameters up to approximately a $\mu$m. Somewhat more silicon was present on the free side than on the wheel side, although again its precise location within the microstructure was not apparent.

EXAMPLE II - Sample 376AQ09(2)

An ingot of iron, neodymium, boron, and silicon was prepared following the procedures described for above. The ingot had an average elemental analysis, in atomic percent, by EDS and WDS of:

| | |
|---|---|
| Iron | 78.2 |
| Neodymium | 12.5 |
| Boron | 8 |
| Silicon | 1.3 |

Fragments of the ingot were then placed into an individual quartz crucible, melted, and quenched to form a ribbon as described above. The quench parameters were:

| | |
|---|---|
| Crucible | 1,9 (3/4") Quartz |
| Crucible orifice diameter | 0,92 mm |
| Crucible pressurizing gas: | Argon |
| Crucible discharge pressure: | 0,35 bar |
| Crucible - wheel distance: | 3 mm |
| Charge Size | 40 g |
| Crucible Axis: | Perpendicular |
| Shroud gas: | He 0,70 bar |
| Scraper gas: | Ar 1 bar |
| Chamber gas: | $N_2$ |
| Chamber pressure (gauge): | 0 bar |
| Wheel diameter: | 50 cm |
| Wheel velocity: | 1200 rpm |
| Wheel smoothness: | 240 grit |
| Ribbon thickness: | 15-20 μm |
| Ribbon width: | 1,8 mm |
| Yield | 32 g |

Magnetic measurements of the resultant as quenched ribbon showed it to have a low $BH_{max}$ of 8-16 kTA/m (1-2 MGOe), and a low coercive force of 0,08-0,16 MA/m (1 to 3 KOe). The magnetic alloy material as quenched is believed to be substantially isotropic.

Ribbons from the product were wrapped in tantalum foil and sealed under Argon in quartz. Following a six hour anneal at 650°C. the following magnetic parameters were obtained using the procedures described above:

| | Field plane of ribbon parallel to spin direction | Field plane of ribbon perpendicular to spin direction | Field perpendicular to ribbon (measured) | Field perpendicular to ribbon (corrected for demagnetization factor) | |
|---|---|---|---|---|---|
| $(BH)_m$ | 0,148 | 0,126 | 0,099 | 0,141 | (MTA/m) |
| $M_r$ | 0,96 | 0,88 | 0,79 | 0,97 | (T) |
| $H_c$ | 1,08 | 1,13 | 0,96 | 0,96 | (MA/m) |

Q (measured)        0,91

Q corrected for geometric demagnetization factor, field perpendicular to ribbon       1,03

Other ribbons from this material had the following parameters:

| Force | Energy Product (MTA/m) | Coercive Force (MA/m) | |
|---|---|---|---|
| | 0,150 | 0,80 | 9.8 |
| | 0,129 | 1,09 | |

From these results it is clear that an alternate route to obtaining material with Q greater than 1 is to quench from the melt to a precursor structure e.g., an amorphous or microcrystalline have a grain size less than the characteristic grain diameter ($R_o$). This non-interacting structure is converted to the appropriate structure for enhanced magnetic properties by appropriate heat treating. The example given here has not been optimized for maximum magnetic properties in the final product.

EXAMPLE III - Sample 469AA12(1)

The ingot of iron, praseodymium, neodymium, boron, and silicon was prepared following the procedures described for above. The ingot had an average elemental analysis, in atomic percent by EDS and WDS of:

| Iron | 75.4 |
|---|---|
| Neodymium | 15.1 |
| Boron | 6.3 |
| Silicon | 0.5 |
| Aluminium | 2.7 |

Fragments of the ingot were then placed into an individual quartz crucible, melted, and quenched to form a ribbon as described above. The quench parameters were:

| Crucible | 5 cm (2") Quartz (Tw) |
|---|---|
| Crucible orifice diameter | 0.65 mm |
| Crucible pressurizing gas: | Argon |
| Crucible discharge pressure: | 0,14 bar |
| Crucible - wheel distance: | 5 mm |
| Charge Size | 500 g |
| Crucible Axis: | Perpendicular |
| Chamber gas: | Argon |
| Chamber pressure (gauge): | 200 mbar (6 in Hg) |
| Wheel diameter: | 30 cm |
| Wheel velocity: | 900 rpm |
| Wheel Smoothness: | 600 grit |
| Ribbon thickness: | 35-62 $\mu$m ± 6.35 |
| Ribbon width: | 1.49 mm ±.349 |
| Yield | 375 g |

The following as quenched magnetic parameters were obtained using the procedures described above:

| | Field | Field | Field | Field | |
|---|---|---|---|---|---|
| | plane of ribbon parallel to spin direction | plane of ribbon perpendicular to spin direction | perpendicular to ribbon (uncorrected) | perpendicular to ribbon (corrected)(*) | |
| $BH_{max}$ | 0,251 | 0,170 | 0,152 | 0,205 | (MTA/m) |
| $M_r$ | 1,22 | 1,00 | 0,96 | 1,11 | (T) |
| $H_c$ | 1,75 | 1,75 | 1,69 | 1,69 | (MA/m) |

Q   (measured)    1.33

Q   corrected for geometric demagnetization factor, field perpendicular to ribbon   1.45

(*) for geometric demagnetization factor.

Fragments of the ribbon were analyzed by EDS and WDS. The ribbon fragments had the following elemental analysis, in atomic percent:

| | |
|---|---|
| Iron | 75.99 |
| Neodymium | 14.78 |
| Boron | 6.64 |
| Silicon | 2.58 |

Other ribbons spun and quenched from this material had the following parameters:

| | Energy Product (MTA/m) | Coercive Force (MA/m) |
|---|---|---|
| | | greater than |

These materials exemplify the problem in correctly measuring these high coercive force materials. When the ribbon which was checked for isotropy was measured of 180° from the initial direction of magnetization the value of the $BH_{max}$ was reduced from 0,242 to 0,213 remeasuring in the original direction yielded 0,251. Since the two directions of measurement are cyrstallographically equivalent, this difference can only be due to a failure to completely saturate the material in the reverse direction since the material was magnetized with nominally identical 12T pulses in each direction this indicated that once magnetized the field required to reverse the magnetization is greater than the field required to produce the magnetization initially. Practically, this results in a "training" phenomenon, where the initial direction of magnetization becomes a preferred direction in the material.

EXAMPLE IV

(Cross-sectional Transmission electron micrographs of as-quenched magnet flakes.)

A set of as-quenched flakes of the Nd-Pr-Fe-B-Si magnetic alloys were prepared for examination by high-resolution transmission electron microscopy. The high resolution transmission electron microscopy view cut through the thickness of the thin flake, so that microstructural uniformity through the flake thickness (30 to 40 $\mu$m) could be checked. A piece of the same flake was broken off and measured magnetically. Material from two runs was used. The procedures utilized in Examples I-III above were used to prepare the ingot and to prepare the flakes.

Run 502AB01 had a composition (determined by plasma and chemical analysis) of Nd 12.0 atomic percent, Pr 0.05 atomic percent, B 5.6 atomic percent, Si 1.7 atomic percent, and Fe remainder. A 400 g, charge was ejected at a 0,2 bar pressure through a 0,8 mm hole onto a copper wheel rotated at 22 m/sec. The melt temperature was increased to over 1400°C during part of the run in order to unclog the orifice.

Run 400AA10 had a composition (determined by plasma and chemical analysis) of approximately Nd 9.8 atomic percent, Pr 2.5 atomic percent, B 5.9 atomic percent, Si 0.5 atomic percent, and remainder Fe. A 32 g charge was ejected at 0,2 bar pressure from a 0.8 mm orifice onto a copper wheel rotating at 24 m/s.

Three flakes from Run 502AB01 with widely different magnetic properties were chosen for detailed analysis.

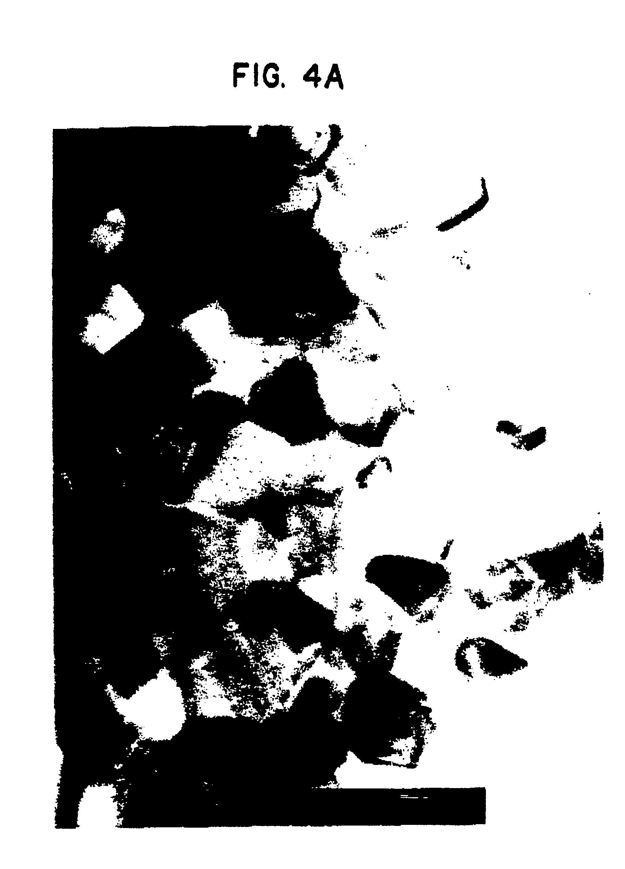

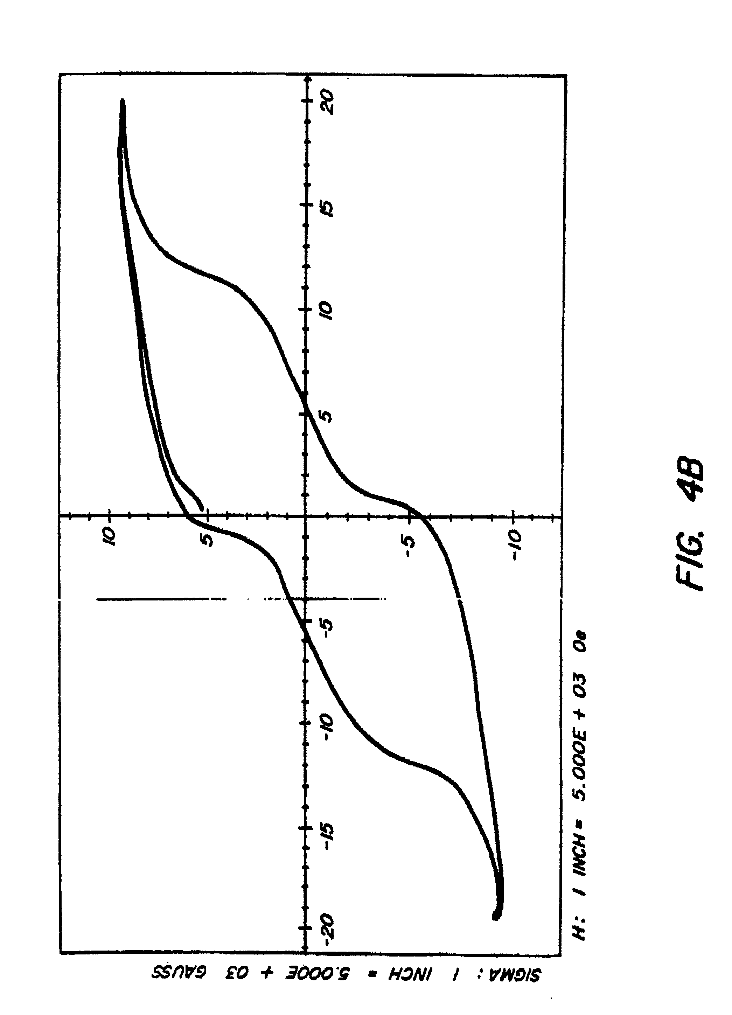

Sample 502AB01(4) was a large-grain sample. ("under-quenched"). Its microstructure is shown in the micrograph of Figure 4a, and Figure 4b shows the corresponding hysteresis loop. The characteristic size of the grains was about 100 nm or greater, and the magnetic performance was poor, with a $BH_{max}$ of only 0,016 MTA/m (2 MGOe).

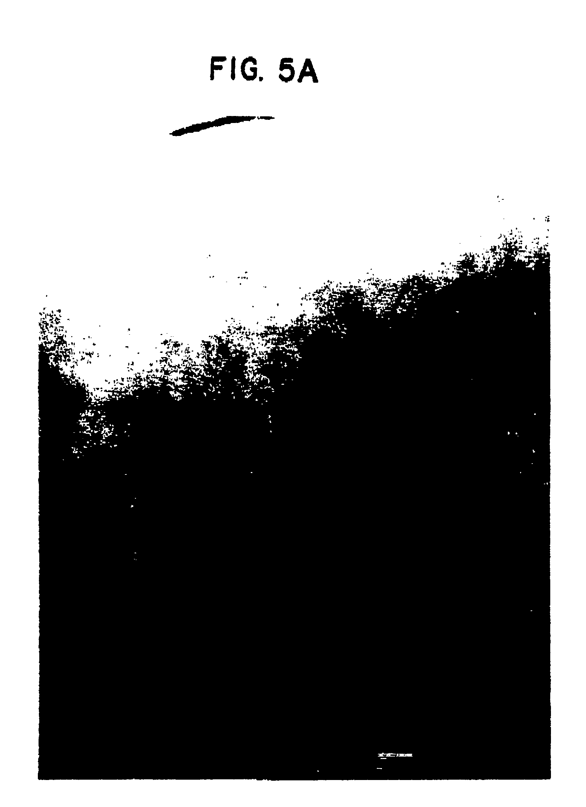

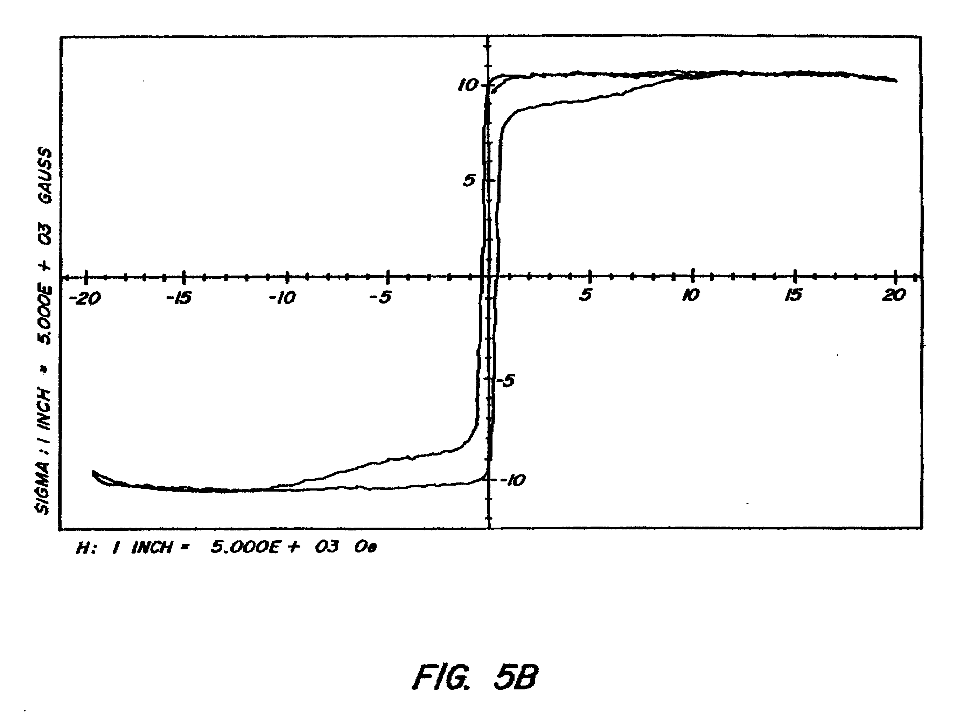

Sample 502AB01(8) was a small-grain sample ("overquenched"). Its microstructure is shown in Figure 5a, and Figure 5b shows the corresponding hysteresis loop. The structure appeared amorphous, although electron diffraction indicated the presence of some crystallites of size less than about 5 nm. The magnetic energy product was very poor (7,9 kTA/m; 1 MGOe), because the coercive force Hc was less than 0,03 MA/m (400 0e.) The remanence Mr was large due to strong interaction effects.

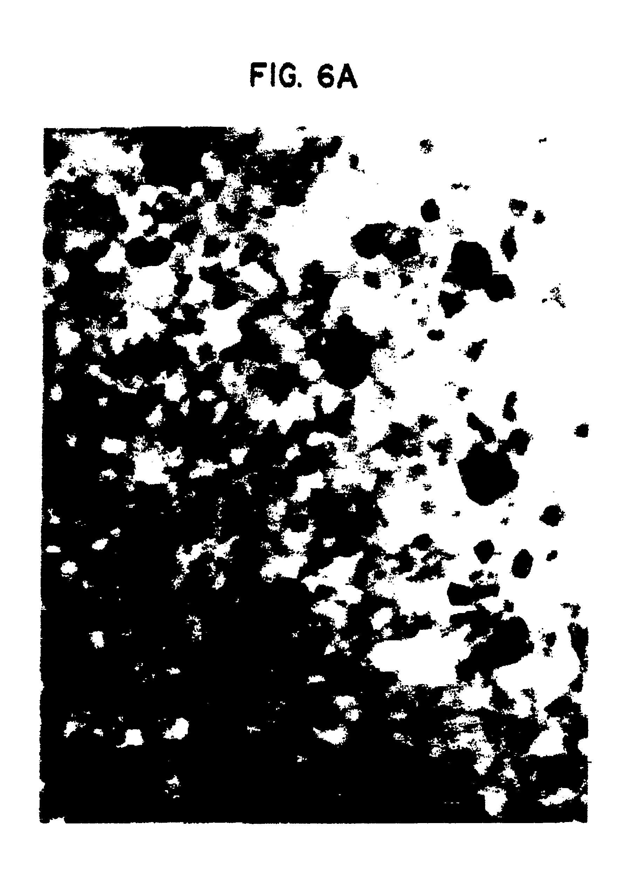

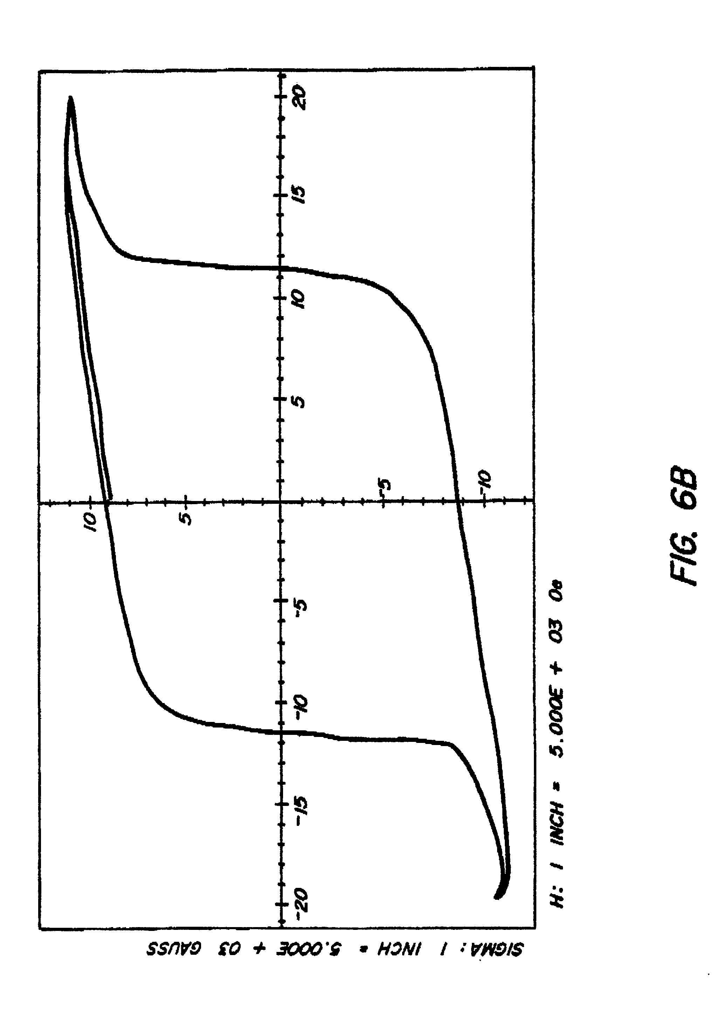

Sample 5502AB01(35) was a sample from the regime where the grains are near the optimum size for interaction enhancement. The microstructure is shown in Figure 6a, and the corresponding hysteresis loop is shown in Figure 6b. The crystalline grains are approximately 20-30 nm across, and are randomly oriented with respect to one another. The size distribution about the mean may be graphically and numerically determined by well known methods. Higher magnification (not shown) suggested that the grain boundaries were clean, with no apparent second phases present. The magnetic energy product is 0,143 MTA/m (18 MGOe), and the remanence is greater than 0,9 T (9 kG) corresponding to a value of Q greater than 1.0.

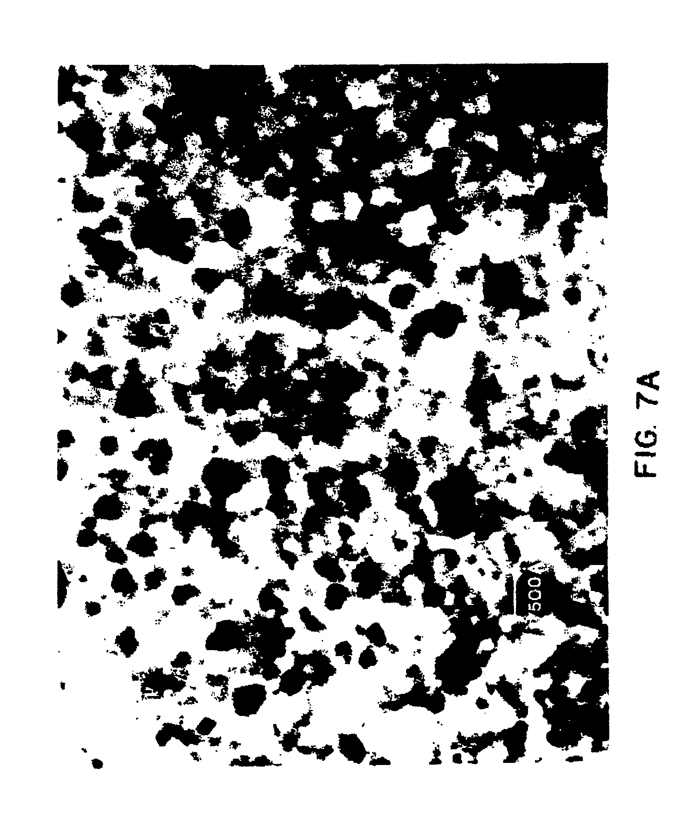

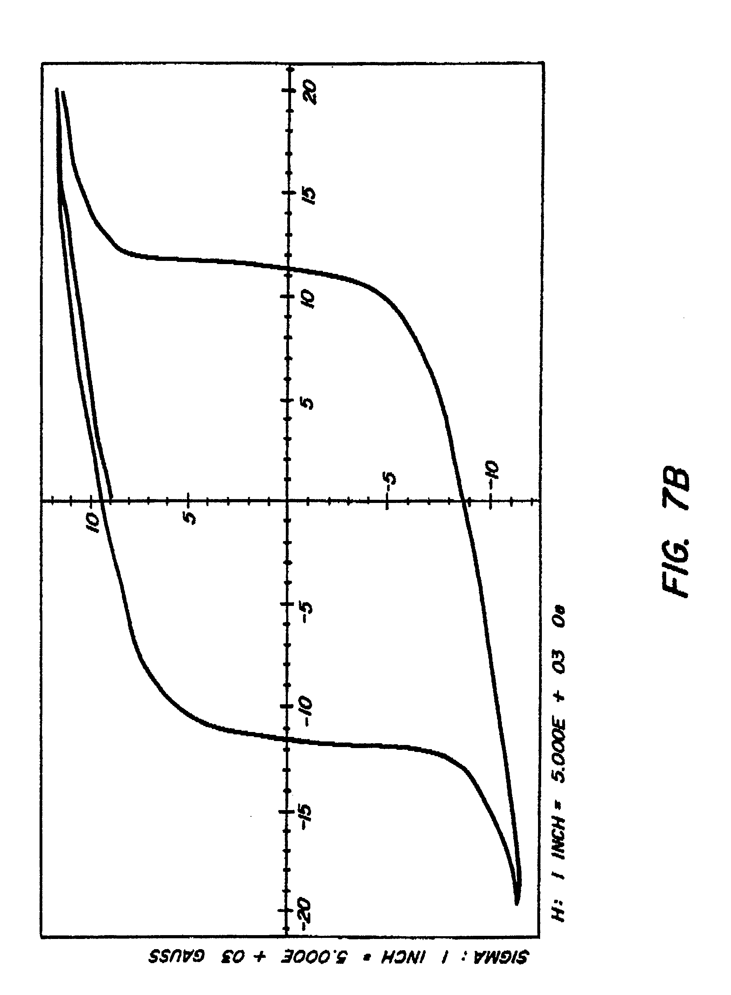

Sample 400AA10(6) was a sample from a different run, which also illustrates the regime of optimum-size grains. The microstructure is shown in Figure 7a, and the corresponding hysteresis loop in Figure 7b. Again, the crystalline grains are 20-30 nm across, and the microstructure looks very much like that in Figure 6a, although the composition is slightly different. The magnetic parameters are also very similar to those in Sample 502AB01(35), i.e., $(BH)_{max}$ greater than 0,12 MTA/m (15 MGOe), and Q greater than 1.0.

It is believed, based on electron diffraction studies, that all of the samples had as the major phase the tetragonal , $P4_2/mnm$ structure associated with the $RE_2Fe_{14}B_1$ material, although the overquenched sample had significantly broader peaks than the other samples.

## Claims

1. Magnetically isotropic hard magnetic material of the tetragonal TM-RE-B-type, wherein
   TM means one or more transition metal or metals, respectively, like iron and
   RE means one or more rare earth metal or metals,
   which material consists essentially of a solid mass of uniaxial crystallites, each crystallite with an easy axis of crystallisation, and each of said crystallites meeting adjacent crystallites at grain boundaries therebetween and being crystallographically non-oriented with respect to the adjacent crystallites at said grain boundaries therebetween, characterized by the following features:
   a) the grain boundaries of the crystallites are substantially free of second phases;
   b) individual crystallites each have a characteristic size $R_o$ substantially according to the following equation:

   $$R_o = a. \ H_e/H_a$$

wherein

a is the interatomic distance,

$H_e$ is the magnetic exchange field between the adjacent grains, and

$H_a$ is the magnetic anisotropiy field of the material;

c) the individual cystallites have grain sizes between 10 and 100 nm within a distribution to allow quantum mechanical exchange coupling between surface atoms of adjacent crystallites across grain boundaries, to provide an isotropic magnetic energy product greater than the maximum isotropic energy product $BH_{max}$ predicted by the non-interactive Stoner and Wohlfarth model, a magnetic retention parameter Q greater than 1,0 and a remanence greater than 0,9 T.

2. Hard magnetic material as claimed in claim 1,
**characterized in that**
it comprises a tetragonal major phase of $P4_2/mnm$ crystallography, with the nominal composition

$$Fe_a (Nd, Pr)_b B_c (Si, Al)_d$$

where
a is from 75 to 85
b is from 10 to 20
c is from 5 to 10 and
d is up to 5
said material having a Fe-Fe interatomic distance of about 0,25 nm, a magnetic exchange field $H_e$ of about 477,5 MA/m (6 MOe) and a magnetic anisotropy field $H_a$ of about 5,6 MA/m (70 kOe).

3. Hard magnetic material as claimed in claim 1 or 2,
**characterized in that**
the characteristic size $R_o$ of the individual crystallographic grain is in the order of 20 nm.

4. Hard magnetic material as claimed in claim 1,
characterized in that TM and RE is chosen from the group of at least one of
a) $SmCo_5$ having a magnetic exchange field $H_e$ of about 716 MA/m, a magnetic anisotropy field $H_a$ of about 23,9 MA/m and a characteristic grain size $R_o$ of the individual grains of about 8 nm
and
b) $Sm_2Co_{17}$, having a magnetic exchange field $H_e$ of about 955 MA/m, a magnetic anisotropy field $H_a$ of about 6,4 MA/m and a characteristic grain size $R_o$ of the individual grains of about 40 nm.

5. Hard magnetic material as claimed in claim 1,
**characterized in that**
it has the nominal composition $RE_2TM_{14}B_1$ where TM is chosen from the group consisting of iron, cobalt and nickel.

6. Hard magnetic material as claimed in one of the preceding claims,
**characterized in that**
for exchange interaction neighbouring grains are in metallic contact along their surfaces without intermediate layers of second phases.

**Revendications**

1. Matériau magnétique dur, magnétiquement isotropique, du type TM-RE-B tétragonal, dans lequel :
TM signifie un ou plusieurs métal ou métaux de transition, respectivement, comme le fer, et
RE signifie un ou plusieurs métal ou métaux des terres rares, matériau qui est constitué essentiellement d'une masse solide de cristallites uniaxiales, chaque cristallite avec un axe aisé de cristallisation, et chacune desdites cristallites rencontrant des cristallites adjacentes aux limites des grains entre elles et étant cristallographiquement non orientées par rapport aux cristallites adjacentes auxdites limites des grains entre elles, caractérisé par les particularités suivantes :
a) les limites des grains des cristallites sont sensiblement exemptes de secondes phases;
b) des cristallites individuelles ont chacune une taille caractéristique $R_o$, répondant sensiblement à l'équation suivante :

$$R_o = a. H_e/H_a$$

dans laquelle :

a est la distance interatomique,

$H_e$ est le champ d'échange magnétique entre les grains adjacents, et

$H_a$ est le champ d'anisotropie magnétique du matériau;

c) les cristallites individuelles ont des tailles des grains entre 10 et 100 nm à l'intérieur d'une distribution pour permettre un couplage par échange mécanique quantique entre les atomes en surface de cristallites adjacentes à travers les limites des grains, afin de fournir un produit énergétique magnétique isotropique supérieur au produit énergétique isotropique maximum $BH_{max}$ prévu par le modèle non-interactif de Stoner et Wohlfarth, un paramètre de rétention magnétique Q supérieur à 1,0 et une rémanence supérieure à 0,9 T.

2. Matériau magnétique dur selon la revendication 1, caractérisé en ce qu'il comprend une phase principale tétragonale de cristallographie $P4_2/mnm$, avec la composition nominale :

$$Fe_a (Nd, Pr)_b B_c (Si, Al)_d$$

dans laquelle :

a est compris entre 75 et 85

b est compris entre 10 et 20

c est compris entre 5 et 10 et

d atteint 5

ledit matériau ayant une distance interatomique Fe-Fe d'environ 0,25 nm, un champ d'échange magnétique $H_e$ d'environ 477,5 MA/m (6 MOe) et un champ d'anisotropie magnétique $H_a$ d'environ 5,6 MA/m (70 kOe).

3. Matériau magnétique dur selon la revendication 1 ou 2, caractérisé en ce que la taille caractéristique $R_o$ du grain cristallographique individuel est de l'ordre de 20 nm.

4. Matériau magnétique dur selon la revendication 1, caractérisé en ce que TM et RE sont choisis dans le groupe d'au moins l'un de :

a) $SmCo_5$ ayant un champ d'échange magnétique $H_e$ d'environ 716 MA/m, un champ d'anisotropie magnétique $H_a$ d'environ 23,9 MA/m et une taille caractéristique des grains $R_o$ pour les grains individuels d'environ 8 nm

et

b) $Sm_2Co_{17}$, ayant un champ d'échange magnétique $H_e$ d'environ 955 MA/m, un champ d'anisotropie magnétique $H_a$ d'environ 6,4 MA/m et une taille caractéristique des grains $R_o$ pour les grains individuels d'environ 40 nm.

5. Matériau magnétique dur selon la revendication 1, caractérisé en ce qu'il présente la composition nominale $RE_2TM_{14}B_1$ où TM est choisi dans le groupe constitué du fer, du cobalt et du nickel.

6. Matériau magnétique dur selon l'une des revendications précédentes, caractérisé en ce que pour l'interaction par échange des grains voisins sont en contact métallique suivant leurs surfaces sans couches intermédiaires de secondes phases.

## Patentansprüche

1. Magnetisch isotropes, hartmagnetisches Material vom tetragonalen TM-RE-B-Typ, mit

TM = eines oder mehrere Übergangsmetalle bzw. Metalle wie etwa Eisen und

RE = eines oder mehrere Seltenerdmetalle oder Metalle,

wobei das Material im wesentlichen aus einer festen Masse von einachsigen Kristalliten besteht und jeder Kristallit eine Hauptrichtung der Kristallisation hat und jeder der Kristallite auf angrenzende Kristallite an dazwischen befindlichen Korngrenzen trifft und in bezug auf die angrenzenden Kristallite an den dazwischen befindlichen Korngrenzen kristallographisch unorientiert ist, gekennzeichnet durch die folgenden Merkmale:

a) die Korngrenzen der Kristallite sind im wesentlichen frei von Ausscheidungsphasen;

b) einzelne Kristallite haben jeweils eine charakteristische Größe $R_o$ im wesentlichen gemäß der folgenden Gleichung:

$$R_o = a \cdot H_e/H_a$$

wobei

- a = Atomabstand,
- $H_e$ = magnetisches Austauschfeld zwischen den aneinandergrenzenden Kristalliten und
- $H_a$ = magnetisches Anisotropiefeld des Materials;

c) die einzelnen Kristallite haben Korngrößen zwischen 10 und 100 nm in einer solchen Verteilung, daß eine quantenmechanische Austauschkopplung zwischen Oberflächenatomen von aneinandergrenzenden Kristalliten über Korngrenzen hinweg möglich ist, um ein isotropes Magnetenergieprodukt, das größer als das maximale isotrope Energieprodukt $BH_{max}$ ist, das durch das sich nicht gegenseitig beeinflussende Modell nach Stoner und Wohlfarth vorhergesagt ist, einen magnetischen Remanenzfaktor Q von mehr als 1,0 und eine Remanenz von mehr als 0,9 T zu ergeben.

2. Hartmagnetisches Material nach Anspruch 1,
   **dadurch gekennzeichnet,**
   daß es eine tetragonale Hauptphase einer Kristallographie von $P4_2/mnm$ aufweist mit der nominellen Zusammensetzung

   $$Fe_a (Nd, Pr)_b B_c (Si, Al)_d$$

   mit
   - a = 75-85
   - b = 10-20
   - c = 5-10 und
   - d = bis zu 5

   wobei das Material einen Fe-Fe-Atomabstand von ca. 0,25 nm, ein magnetisches Austauschfeld $H_e$ von ca. 477,5 MA/m (6 MOe) und ein magnetisches Anisotropiefeld $H_a$ von ca. 5,6 MA/m (70 kOe) hat.

3. Hartmagnetisches Material nach Anspruch 1 oder 2,
   **dadurch gekennzeichnet,**
   daß die charakteristische Größe $R_o$ des einzelnen kristallographischen Korns in der Größenordnung von 20 nm liegt.

4. Hartmagnetisches Material nach Anspruch 1,
   **dadurch gekennzeichnet,**
   daß TM und RE ausgewählt sind aus der Gruppe von wenigstens
   a) $SmCo_5$ mit einem magnetischen Austauschfeld $H_e$ von ca. 716 MA/m, einem magnetischen Anisotropiefeld $H_a$ von ca. 23,9 MA/m und einer charakteristischen Korngröße $R_o$ der einzelnen Körner von ca. 8 nm
   oder
   b) $Sm_2Co_{17}$ mit einem magnetischen Austauschfeld $H_e$ von ca. 955 MA/m, einem magnetischen Anisotropiefeld $H_a$ von ca. 6,4 MA/m und einer charakteristischen Korngröße $R_o$ dereinzelnen Körper von ca. 40 nm.

5. Hartmagnetisches Material nach Anspruch 1,
   **dadurch gekennzeichnet,**
   daß es die nominelle Zusammensetzung $RE_2TM_{14}B_1$ hat, wobei TM ausgewählt ist aus der aus Eisen, Cobalt und Nickel bestehenden Gruppe.

6. Hartmagnetisches Material nach einem der vorhergehenden Ansprüche,
   **dadurch gekennzeichnet,**
   daß zur gegenseitigen Austausch-Beeinflussung benachbarte Körner in metallischem Kontakt entlang ihren Flächen ohne Zwischenschichten von Ausscheidungsphasen liegen.

$$H_{INT} = 3M$$

*M (kG)*

*H (kOe)*

*FIG. 1*

# SCALE DEPENDENCE OF ENERGY PRODUCT

## BHmax vs. LOG (grain size L)

☐ MEAN—FIELD MODEL

△ EST. W. CORREL.

LOG (grain scale L)

## FIG. 2

EP 0 229 946 B1

SCALE DEPENDENCE OF MAG. RET. FACTOR

Q. vs. LOG ( grain scale L )

FIG. 3

## FIG. 4A

FIG. 4B

H: 1 INCH = 5.000E + 03 Oe

SIGMA : 1 INCH = 5.000E + 03 GAUSS

# FIG. 5A

FIG. 5B

H: I INCH = 5.000E + 03 Oe

SIGMA: I INCH = 5.000E + 03 GAUSS

## FIG. 6A

SIGMA: I INCH = 5.000E + O3 GAUSS

H: I INCH = 5.000E + O3 Oe

FIG. 6B

EP 0 229 946 B1

FIG. 7A

*FIG. 7B*